# EUROPEAN PATENT APPLICATION

(11) **EP 3 575 572 A1**
(43) Date of publication of application: **04.12.2019**
(21) Application number: 19177230.0
(22) Date of filing: 29.05.2019
(51) Int. Cl.: F02B 63/04, H02K 7/18

(54) **SELF CARRYING CANOPY**

(30) Priority: 31.05.2018 NL 2021035
(71) Applicant: Bredenoord Holding B.V., 7325 WT Apeldoorn (NL)
(72) Inventor: de Graaf, Dirkjan Elbertus, 7325 WT Apeldoorn (NL); Eggens, Jan-Eize, 7325 WT Apeldoorn (NL)
(74) Representative: V.O.

(57) **Abstract**

Generators are often provided in a frame to increase ease by which they can be transported, for example by lifting the frame with a crane. Generators comprise many, often moving, parts, and therefor maintenance and inspections are required. In order to access the generator, a frame is provided comprising four posts that connect a rectangular base part to a top structure, between which the generator is provided. The posts are provided near corners of the base part, and thus broad access windows are provided for accessing all sides of the generator. The generator's fan may easily be swivelled out of the frame by its mounting on a swing arm again allowing more easy access to the generator. Doors may be provided to temporarily close of access to the generator, and gaps may be provided between doors and top structure to allow air intake for the generator.

## Description

### FIELD OF THE INVENTION

The invention relates to a frame carrying a generator.

### BACKGROUND

Small generators used for generating electrical energy using a combustion engine may be provided in a frame mainly comprising tubes, for easy carrying around. This, however, leaves the generator exposed and vulnerable to outside influences such as weather conditions or impacts from other objects.

Larger generators are often provided in a frame which provides a protective cover for the components comprised by the generator, such as the engine, fuel tank and cooling fan. The frames usually comprise sheet metal plates with small doors in them for accessing the generator to for example perform inspections and maintenance.

Commonly used frames also provide a carrying arrangement from which the frame may be lifted, for example by connecting a crane hook to the frame. The carrying arrangement is provided at or near the centre of the generator as that is were the centre of gravity of the frame is likely to be. To provide the smallest possible force path for the weight of the generator through the frame towards the carrying arrangement when the frame is lifted at the carrying arrangement, the weight-carrying elements of the frame are also provided at or near the centre of the sides of the frame.

### SUMMARY

It is preferred to provide a frame carrying a generator with improved accessibility to the generator.

A first aspect provides a frame carrying a generator, comprising a rectangular base part arranged for supporting the generator. The frame further comprises four posts, each post connected at a proximal end at a corner of the base part and a top structure, which connects distal ends of all four posts. Furthermore, the frame comprises a carrying arrangement connected to the top structure. The frame is arranged such that when the frame is lifted at the carrying arrangement, the weight of the generator is substantially guided from the base part through the posts to the carrying arrangement. A first access window is provided for accessing a first side of the generator inside the frame between a first and a second post, along a first long side of the frame.

The four posts may each be provided near or at a corner of the base part. The first access window may therefor be sized substantially equal to the size of a side of the frame itself, allowing easy access to the generator without any part of the frame restricting access to the generator.

In known frames carrying generators, part of the frame that is weight-carrying when the frame is lifted, is provided such that it restricts access to at least part of the generator provided in the frame. By placing all of the weight carrying components of the frame to or at the corners, easy accessibility to all sides of the generator may be provided.

To provide sufficient weight-bearing capacity, the posts may be arranged substantially thicker than the conventionally used sheet metal. The posts may be provided as substantially solid beams comprising for example steel, aluminium or plastic parts; alternatively, they may be hollow. In the latter case, the beams preferably have a wall thicker than the conventional plating for engine-generators as the beams will have to carry the weight om the frame and the generator inside.

Apart from the advantage of being strong enough for carrying weight, use of stronger - for example thicker - metal increases resilience against accidental collisions, compared to commonly used steel sheet plating in convention generator canopies.

In an embodiment of the frame, the top structure comprises two short beams provided parallel to a short side of the base part, each short beam connecting two adjacent posts at or near distal ends of said posts, and two long beams, provided parallel to a long end of the base part, each long beam connecting two adjacent posts at or near distal ends of said posts.

Because of the four post structure of the frame, a third access window may be provided between the first post and a third post along a first short side for accessing a third side of the generator inside the frame. Similarly, a second access window may be provided between the second post and a fourth post, and a fourth access window may be provided between the second post and the fourth post. Any number and combination of access windows may be envisioned, for example dependent on which sides of the generator have to be accessed.

The frame may comprise a fan swivelably connected to the frame via a swivelling axis provided at or near a long side of the frame and substantially parallel to said long side, thus constituting a swing arm on which the fan is provided, wherein the swing arm is movable between a first position and a second position by swivelling the swing arm, wherein in the first position the fan is provided inside the frame, and in the second position at least a substantial part of the fan is provided outside the frame.

Such a fan often blocks access to a part of the generator adjacent to the fan. The swivelable connection allows an easy way of temporarily moving the fan away from the part of the generator it blocks, without having the need to remove the fan from the frame.

To temporarily block access to certain parts of the generator, an embodiment of the frame comprises a first door provided between the first post and the second post, wherein the first door is arranged to be movable between a closed position wherein the first door covers at least part of the first access window and an open position wherein the first door exposes said at least part of the first access window for accessing the first side of the generator inside the frame.

The frame may also comprise a second door provided between the first post and the second post, arranged to be movable between a closed position and an open position wherein in the closed position the second door covers at least part of the first access window and in the open position the second door exposes said at least part of the first access window.

In an embodiment of the frame comprising the first door and the second door, at least part of the second door may overlap an overlapping section comprised by the first door when both doors are in their respective closed positions, wherein the overlapping section comprises one or more through holes, for use as a ladder by a person wanting to access the top structure of the frame.

A gap may be provided in the first access window between at least part of the first door in the closed position and at least part of the top structure such that a flow path is provided for air between the outside and the inside of the frame through the gap. This allows a flow of air to be provided to the inside of the frame, even if all doors are in the closed position.

The frame may comprises one or more air flow guidance structures provided inside the frame such that the flow path is provided through the gap, over the one or more air flow guidance structures, towards at least one of an air inlet comprised by the generator and the fan. These air flow guidance structures may comprise a sound absorbing material and may be tapered towards the top structure to decrease sound from the generator leaving the frame through the gap.

The carrying arrangement by which the frame may be lifted, for example by a crane, may be spanned between the two long beams and may be provided substantially above a centre of gravity of the frame carrying the generator. The carrying arrangement may comprise multiple through holes arranged for receiving a crane hook, wherein the multiple through holes are spaced apart.

### DESCRIPTION OF THE FIGURES

The various aspects and embodiments thereof will now be discussed in conjunction with drawings. In the drawings:
Fig. 1 shows a frame for carrying a generator;
Fig. 2A shows the frame with a fan in a first position;
Fig. 2B shows the frame with the fan in a second position;
Fig. 3A shows another embodiment of the frame;
Fig. 3B shows another embodiment of the frame; and
Fig. 4 shows an embodiment of the frame comprising a gap.

### DETAILED DESCRIPTION OF THE EMBODIMENTS

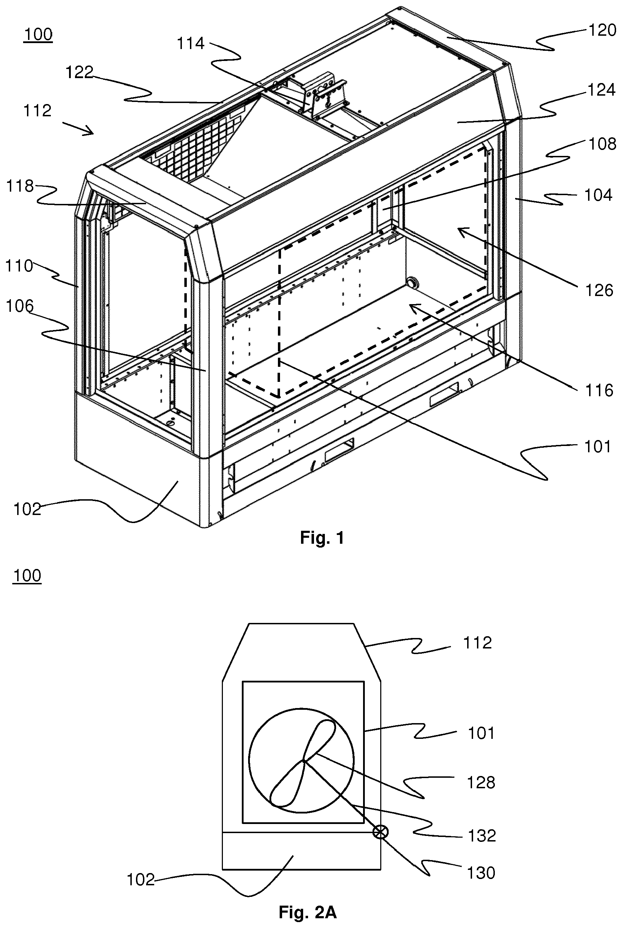

Fig. 1 shows a frame 100 for carrying a generator 101 (shown by a dashed line), comprising a rectangular base part 102 arranged for supporting the generator 101. The rectangular base part 102 comprises two short sides and two long sides, and may be arranged as an open box with four side panels and a bottom. The rectangular base part 102 is preferably provided as a tub for collecting any liquid that may leak from the generator 101 or other components comprised by the frame 100.

The frame 100 further comprises a first post 104, second post 106, third post 108, and fourth post 110, all four connected at proximal ends to the rectangular base part 102. More in particular, the proximal ends are connected to the base part 102 at or near corners of the base part 102.

The frame 100 further comprises a top structure 112, which connects distal ends of all four posts 104, 106, 108, 110. Connected to the top structure 112 is a carrying arrangement 114.

The generator 101 may fill a substantial part of the volume inside the frame 100. With a generator, here an assembly for converting chemical energy from for example diesel to electrical energy is meant. The energy conversion may be performed with a combustion engine where the chemical energy is converted to kinetic energy of a rotating crankshaft which in turn may be converted to electrical energy by an alternator or dynamo. Thus a generator may comprise a fuel container, a combustion engine, an air inlet for the engine, a fan and a radiator for cooling, an alternator or dynamo, or any combination thereof.

The frame 100 is arranged such that when the frame 100 is lifted at the carrying arrangement 114, the weight of the generator 101 is substantially guided from the base part 112 through the posts via the top structure 112 to the carrying arrangement 114.

A first access window 116 is provided between the first post 104 and the second post 106 along a first long side of the frame 100. Preferably, the first access window 116 spans substantially from the first post 104 to the second post 106. Even more preferably, the first access window 116 spans the entire space constrained by the first post 104, the second post 106, the base part 102 and the top structure 112. The first access window 116 allows accessing of a first side of the generator 101.

Because the weight of the generator 101 inside the frame 100 is substantially guided from the base part 102 through the posts to the carrying arrangement 114 when the frame 100 is lifted at the carrying arrangement 114, no posts or other weight-carrying components need to be provided between the first post 104 and the second post 106 which may block access to the first side of the generator 101. Easy access to the generator 101 may be advantageous for maintenance and/or inspection of the generator 101.

In an embodiment of the frame 100, as shown in Fig. 1, the top structure 112 comprises two short beams 118 and 120 provided parallel to a short side of the base part 102. Each short beam connects two adjacent posts at or near distal ends of said posts. The top structure 112 further comprises two long beams 122 and 124, provided parallel to a long side of the base part 102. Each long beam connects two adjacent posts at or near distal ends of said posts. The short beams 118 and 120 and long beams 122 and 124 need not be straight beams, but may indeed also comprise non-straight sections and/or a plurality of straight sections connected at an angle.

Next to the first access window 116, a second access window 126 may be provided between the first post 104 and the third post 108 along a short side of the base part 102. The second access window 126 is arranged for accessing a second side of the generator 101 inside the frame 100.

The carrying arrangement 114 may be spanned between the two long beams 122 and 124, and the carrying arrangement 114 may be provided substantially above a centre of gravity of the frame 100 carrying the generator 101. This may substantially prevent the frame 100 from titling when being lifted at the carrying arrangement 114. The centre of gravity of the generator 101 inside the frame 100 may change, for example depending on placement and replacement of the various components of the generator 101. The configuration retains its centre of gravity. The fuel tank is preferably placed symmetrically below the center of gravity. In this way, an amount of fuel does not affect the center of gravity. Therefor, the position of the carrying arrangement 114 may be adjustable.

In an embodiment, the carrying arrangement 114 comprises multiple through holes arranged for receiving a crane hook, wherein the multiple through holes are spaced apart. When lifting the frame 100 with the crane hook, the through hole corresponding best with the centre of gravity may be chosen to lift the frame 100 from.

Fig. 2A shows a section view of an embodiment of the frame 100, wherein the generator 101 comprises a fan 128. The fan 128 is provided for generating an airflow for cooling the combustion engine, for example by generating the airflow and guiding the airflow over the generator. The fan 128 is conventionally connected to the crankshaft of the combustion engine, but is in this embodiment preferably driven by a separate electromotor.

In this optional implementation, the fan 128 is provided on a swing arm 132 swivelably connected to the frame 100 via a swivelling axis 130 provided at or near a long side of the frame 100 and substantially parallel to said long side. The swivelling of the swing arm 132 allows the swing arm 132 to be movable between a first position and a second position by swivelling the swing arm 132 over the swivelling axis 130. In the first position, as shown in Fig. 2A the fan 128 is contained within the volume of the frame 100. In this first position, the fan 128 substantially blocks access to a third side of the generator 101.

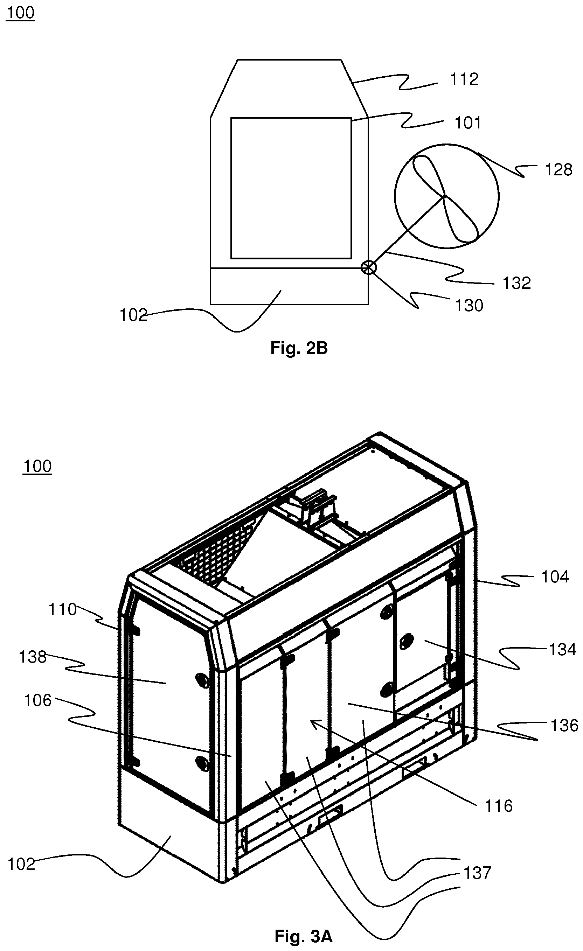

Fig. 2B shows another section view of the embodiment of the frame 100 as shown in Fig. 2A, wherein the fan 128 now is in the second position, wherein the fan is provided substantially or wholly outside the frame 100. In this second position, the fan 128 allows access to the third side of the generator 101 which was previously blocked by the fan 128 in the first position. Furthermore, the fan 128 and the front of the combustion engine is in this position better accessible for maintenance.

With the fan 128 being movable in and out of the frame 100, it is advantageous to provide the fan 128 with the separate electromotor which may be swivelled more easily than a fan drive connected to the crankshaft of the generator's engine.

Fig. 3A shows yet another embodiment of the frame 100, comprising a first door 136 provided between the first post 104 and the second post 106. The first door 136 is arranged to be movable between a closed position as shown in Fig. 3A and an open position. In the closed position, the first door 136 covers at least part of the first access window 116, whereas in the open position the first door 136 exposes said at least part of the first access window 116 for allowing access to the first side of the generator inside the frame. In an embodiment of the frame 100 comprising the fan 128 and the first door 136, the fan 128 may be arranged to swivel through the part of the first access window 116 which is blocked by the first door 136 in its closed position.

In the embodiment of the frame 100 as shown in Fig. 3A as an option a second door 134 is provided between the first post 104 and the second post 106. The second door 134 is arranged to be movable between a closed position and an open position wherein in the closed position the second door 134 covers at least part of the first access window 116 and in the open position the second door 136 exposes said at least part of the first access window 116. Thus, the first door 134 and the second door 136 may be arranged for temporarily blocking access to parts of the first access window 116.

Optionally, the frame 100 comprises a third door 138, provided between the second post 106 and fourth post 110. The third door 138 is arranged for covering an access window provided at a short side of the base part 102 in a closed position, and allowing access to said access window in an open position. Embodiments of the frame 100 comprising any combination of the first door 134, second door 136, and the third door 138 may be envisioned.

The first door 134 may be hingedly attached to the first post 104. The first door 136 may comprise multiple door sections 137 which may be hingedly interconnected and one of the door sections 137 may be hingedly attached to the second post 106.

The various doors and door sections may be locked by means of handles that may be actuated for unlocking the applicable doors or door sections. Preferably, the first door 136 comprises such locking system to be conveniently openable - in particular the section of the first door 136 closest to the second door 137. The other doors and door sections may be locked by means of screws or nuts and bolts. Opening such doors may be less convenient, but in this provides additional security to lock parts of the generator 101 of which exposure provides an increased risk to people, for example because this could result in exposure of moving parts

In alternative implementations, different types of doors may be provided, like roller shutters.

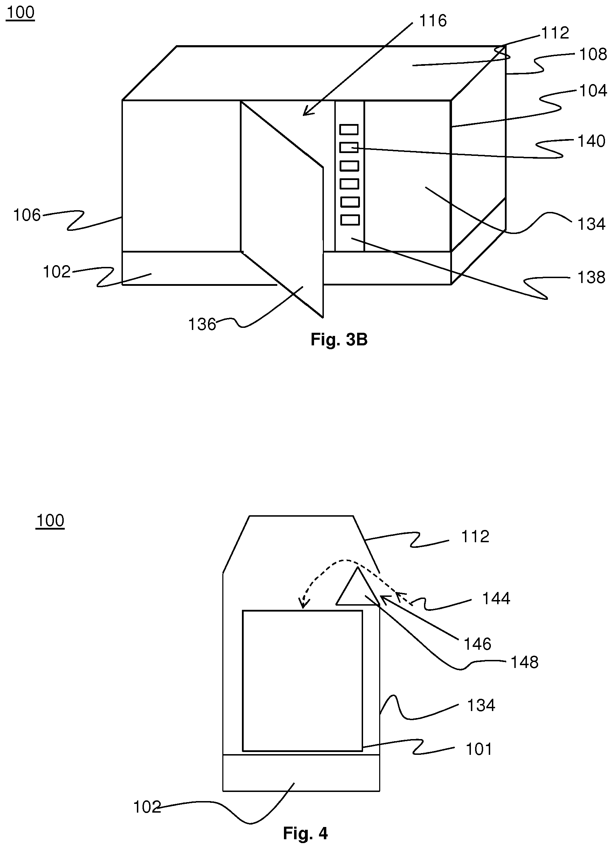

Fig. 3B shows an embodiment of the frame 100 wherein the first door 136 is not in its closed position, thus exposing at least part of the first access window 116. The second door 134 in this embodiment comprises an overlapping section 138, which is covered by at least part of the first door 136 when both doors are in their respective closed positions. When the first door 136 is in the open position, the overlapping section 138 is exposed.

The overlapping section 138 may comprise one or more through holes 140 which may be used as a ladder, for example for accessing the top section 112.

Fig. 4 shows a section view of an embodiment of the frame 100, wherein a gap 146 is provided between at least part of the first door 134 in its closed position and at least part off the top structure 112. The gap 146 provides a flow path 144 for air between the outside and the inside of the frame 100 through the gap 146.

Optionally, one or more air flow guidance structures 148 are provided inside the frame 100 such that the flow path 144 is provided through the gap 146 over one or more air flow guidance structures 148 towards at least one of an air inlet comprised by the generator 101 and the fan 128.

The one or more air flow guidance structures 148 are preferably elongated and provided parallel to a long side of the base part 102. An embodiment of the frame 100 may be envisioned in which an elongated air flow guidance structure is provided near both of the two short sides of the frame 100.

The air flow guidance structures 148 may comprise a sound absorbing material which may reduce noise from the generator 101 from exiting the frame 100 through the gap 146. The air flow guidance structures 148 may be tapered toward the top structure 112.

In summary, generators are often provided in a frame to increase ease by which they can be transported, for example by lifting the frame with a crane. Generators comprise many, often moving, parts, and therefor maintenance and inspections are required. In order to access the generator, a frame is provided comprising four posts that connect a rectangular base part to a top structure, between which the generator is provided. The posts are provided near corners of the base part, and thus broad access windows are provided for accessing all sides of the generator. The generator's fan may easily be swivelled out of the frame by its mounting on a swing arm again allowing more easy access to the generator. Doors may be provided to temporarily close of access to the generator, and gaps may be provided between doors and top structure to allow air intake for the generator.

In the description above, it will be understood that when an element such as layer, region or substrate is referred to as being "on" or "onto" another element, the element is either directly on the other element, or intervening elements may also be present. Also, it will be understood that the values given in the description above, are given by way of example and that other values may be possible and/or may be strived for.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

It is to be noted that the figures are only schematic representations of embodiments of the invention that are given by way of non-limiting examples. For the purpose of clarity and a concise description, features are described herein as part of the same or separate embodiments, however, it will be appreciated that the scope of the invention may include embodiments having combinations of all or some of the features described. The word 'comprising' does not exclude the presence of other features or steps than those listed in a claim. Furthermore, the words 'a' and 'an' shall not be construed as limited to 'only one', but instead are used to mean 'at least one', and do not exclude a plurality.

A person skilled in the art will readily appreciate that various parameters and values thereof disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. Frame carrying a generator, comprising:
- a rectangular base part arranged for supporting the generator;
- four posts, each post connected at a proximal end at or near a corner of the base part;
- a top structure, which connects distal ends of the four posts,
- a carrying arrangement connected to the top structure,
wherein
the frame is arranged such that when the frame is lifted at the carrying arrangement, the weight of the generator is substantially guided from the base part through the posts to the carrying arrangement; and
a first access window is provided for accessing a first side of the generator inside the frame between a first and a second post, along a first long side of the frame.

2. Frame according to claim 1, wherein the top structure comprises:
- two short beams provided parallel to a short side of the base part, each short beam connecting two adjacent posts at or near distal ends of said posts; and
- two long beams, provided parallel to a long end of the base part, each long beam connecting two adjacent posts at or near distal ends of said posts.

3. Frame according to any of the previous claims, further comprising a third access window provided between the first post and a third post along a first short side for accessing a third side of the generator inside the frame.

4. Frame according to any of the preceding claims, further comprising a fan swivelably connected to the frame via a swivelling axis provided at or near a long side of the frame and substantially parallel to said long side, thus constituting a swing arm on which the fan is provided, wherein the swing arm is movable between a first position and a second position by swivelling the swing arm, wherein in the first position the fan is provided inside the frame, and in the second position at least a substantial part of the fan is provided outside the frame.

5. Frame according to any of the previous claims, wherein
a first door is provided between the first post and the second post;
the first door is arranged to be movable between a closed position wherein the first door covers at least part of the first access window and an open position wherein the first door exposes said at least part of the first access window for accessing the first side of the generator inside the frame.

6. Frame according to any of the previous claims, comprising a second door provided between the first post and the second post, arranged to be movable between a closed position and an open position wherein in the closed position the second door covers at least part of the first access window and in the open position the second door exposes said at least part of the first access window.

7. Frame according to claim 6, wherein at least part of the second door overlaps an overlapping section of the first door when both doors are in their respective closed positions, wherein the overlapping section comprises one or more through holes, for use as a ladder by a person wanting to access the top structure of the frame.

8. Frame according to any of the claims 5-7, wherein a gap is provided in the first access window between at least part of the first door in the closed position and at least part of the top structure such that a flow path is provided for air between the outside and the inside of the frame through the gap.

9. Frame according to claim 8, wherein the frame comprises one or more air flow guidance structures provided inside the frame such that the flow path is provided through the gap, over the one or more air flow guidance structures, towards at least one of an air inlet comprised by the generator and the fan.

10. Frame according to claim 9, wherein the air flow guidance structures comprise a sound absorbing material.

11. Frame according to claim 9 or 10, wherein the air flow guidance structures are tapered towards the top structure.

12. Frame according to any of the claims 2-11, wherein the carrying arrangement is spanned between the two long beams.

13. Frame according to any of the preceding claims, wherein the carrying arrangement is provided substantially above a centre of gravity of the frame carrying the generator.

14. Frame according to any of the preceding claims, wherein the carrying arrangement comprises multiple through holes arranged for receiving a crane hook, wherein the multiple through holes are spaced apart.
